# EUROPEAN PATENT SPECIFICATION

(11) **EP 0 777 974 B1**
(45) Date of publication and mention of the grant of the patent: **20.01.1999**
(21) Application number: 96118587.3
(22) Date of filing: 20.11.1996
(51) Int. Cl.: A23K 1/00, A23K 1/18

(54) **Expanded fodder**
Expandiertes Futter
Fourrage expansé

(30) Priority: 06.12.1995 IT MI952564
(43) Date of publication of application: 11.06.1997
(73) Proprietor: UVIGAL S.p.A., 24040 Filago (Bergamo) (IT)
(72) Inventor: Vismara, Francesco, 22052 Cernusco Lombardone, Lecco (IT); Vieti, Edgardo, 20056 Trezzo sull'Adda, Milano (IT)
(74) Representative: Klausner, Erich

(56) References cited:
- EP-A- 0 645 095
- WO-A-94/07376
- DE-B- 2 204 049
- US-A- 3 817 786
- US-A- 5 030 468

## Description

The instant invention concerns simple, complete and complemetary, expanded, hygienized, high energetic feeds as well as a low cost process for the manufacture thereof as defined by the appended claims.

More particularly, the instant invention concerns simple,complementary, expanded,hygienized feeds with a rumen undegradable protein fraction of at least 70%, with an almost completely (at least 90%) dextrinised starch fraction and with flavoring agents generated by the manufacturing process, as well as a low cost process for the manufacture thereof.

The progress achieved in the field of animal feeding in conjunction with the progress accomplished in the fields of genetics, stock-farming and biotechnologies have allowed, in these past few years, to significantly improve the production efficiency of live-stock.

Considerable importance must be attributed to all those technologies which have allowed to better exploit the feed stuffs and consequently to increase the conversion into meat, eggs, milk and the like inasmuch as feeding represents the factor most affecting the production costs.

At the present state of the art, a considerable degree of information has been achieved about the nutritional requirements of the various farm live-stock species and every effort is made in order to compound the most efficient possible feeds by using also additives which help to improve the efficacy of said feeds.

Since long, use is being made of expensive agents having auxinic activity, of pro-biotics, of enzymes, of oligo-elements and vitamins and, in those countries where it is allowed, also of hormones.

The need to provide a new manner for improving the efficacy of the feeds, of limited costs, has certainly been felt as a very important factor by all feed technologists.

Unfortunately, though, in the near future it will be very unlikely that new agents useful for that purpose will be developed inasmuch as the costs for isolating them, for the registration of new molecules according to the requirements imposed on registrants by the regulations in force are very high indeed (in the order of tens of millions of dollars) and the R&D times are very long.

Moreover, the fact that the growth promoters with auxinic activity, usually employed, belong to the class of antibiotics gives rise in the more sophisticated consumer a form of repulsion towards zootechnical products. This feeling of aversion is even stronger towards "hormonized" zootechnical products.

One has to take into account also the fact that as far as auxines and the pro-biotics (such as, e.g., microorganisms of the genus Lactobacillus, Streptococcus, Bacillus subtilis, etc.) are concerned, the productive response of the animals is quite different depending on the age (more efficient in the young stock) and on the status of the environment, having specific regard to the hygienic state of the farm, to the type of diet and to the feedstuffs employed.

As to the enzymes, their still high cost and their relative stability towards the processing technologies (steam and high temperatures) limit their utility. Therefore, great attention deserve those technological processes which achieve the object of:
- improving the palatability of the feeds;
- inactivating the anti-nutritional substances which may be present in some of the feedstock;
- increasing the digestibility and the capacity to assimilate the nutrients also at the intestinal level;
- destroying the microbial charge with specific reference to pathogenes;
- minimizing the costs of the feeds.

Other costs have to be borne also for flavouring the feeds with essences stemming from the perfumery industry in order to improve the palatability.

It is therefore an object of the present invention to provide feeds with a rumen undegradable protein fraction equal or higher than 70%.

Another object of the present invention is that of increasing the energetic value of the feeds by means of almost complete dextrinisation of the starch fraction of said feeds.

A yet further object of the present invention is that of attaining autonomously - viz. without the use of any additive - during the manufacturing process of the inventive feeds the generation of flavours capable of improving the palatability of the feeds.

A still further object of the invention is that of providing feeds useful for all farm live-stock species, be they ruminants or monogastrics.

For instance, in the case of high-production milk cows which, as it is known to those skilled in the art, are ruminants, it is necessary:
- that there be a large quantity of nutrients needed to meet the energetic requirements;
- that the rumen, which can be compared to a great fermenter, operates at its maximum;
- that the rumination be maintained and favored so as not to incur in problems which are caused in the course of the fermentative process by an excess of concentrated feedstuffs (i.e. feeds).

On the other hand, it is known that the intake of great amounts of feedstuff is limited by the following factors:
- the capacity of ingesting feedstuff,
- the volume of said feedstuff,
- the dwelling time of the feed in the digestive apparatus,
- its degree of palatability.

In fact, the space available depends on:
- the size of the upper stomach which is related to the size of the animal and hence also to the live weight;
- the speed of emptying the digestive tube (especially the rumen and the reticulum) which basically depends on the time required for reducing the feedstuff into small particles;
- the speed of transit, which in turn is related to the good functioning of the rumen, to the degree of mastication and rumination (which is indispensable for the fodder) and the microbial activity, hence the ruminal digestibility and degradability of the feedstuff).

A possibility is that of improving the palatability and the digestibility of the diet providing highly energetic rations resulting from highly assimilable starch and from highly absorbable proteins which pass unaltered the rumen into the intestine (the so-called by-pass proteins).

The issue which is of particular interest to the milk-cow and beef-cattle farmers (and consequently the feed manufacturers) is that arising from the necessity of the intake of large amounts of proteins.

In the rumen, 70-75% of the food proteins is decomposed by the microorganisms up to peptides and aminoacids which in turn can further be degraded up to ammonia.

The decomposition products are utilized by the bacteria for the building up of proteins.

The rumen modifies the value of the food proteins which are converted into protozoal and bacterial proteins almost independently from their original compositions. In fact, the microbial proteins and about 25-30% of the food proteins present in the rations reach the intestine.

The ammonia yielded by the decomposition of the proteins is in part utilized for bacterial synthesis and in part absorbed through the rumen wall. From the rumen the ammonia passes into the liver wherein it is converted into urea and as such it is then found in the saliva (wherefrom it returns into the rumen to be utilized for the proteic synthesis) and in the urine.

When the amount of ammonia, deriving from the intake of high amounts of food proteins, exceeds the capacity of the bacteria and protozoa to utilize it for the buildup of their proteins, there is also a greater amount of ammonia which has to be absorbed in the rumen and transformed in the liver. If the amount of ammonia is such as not to be easily converted into bacterial or protozoal proteins or absorbed through the rumen wall, there is an increase of the pH value in the rumen with consequent serious disorders (alkalosis). If then the amount of absorbed ammonia exceeds the capacity of the liver to convert it into urea, a general toxic condition arises with symptoms of poisening.

The excessive production of ammonia can occur fairly frequently in high productive milk cows for which, as already stated, there is a need for delivering large amounts of proteins.

As it is known to those skilled in the art, in order to overcome such drawbacks proteins must be administered which to a large extent are undegradable but which can be directly absorbed by the intestine: the by-pass proteins which according to the present invention can be produced in a novel manner and at low cost.

The denatured proteins are,furthermore, very useful also for monograstric animals since they are easily acted on by the pancreatic enzymes. A higher efficiency of the digestive process ensues therefrom. This justifies also the supply of the proteins according to the inventive process to monogastrics.

In order then to achieve an increase of the digestibility and to meet the energetic requirements of the stock farm, since long have been known several systems for the processing of starch, useful for modifying the structure thereof up to a partial gelatinization of same.In fact, a suitable amount of gelatinization is an essential condition for favouring the hydrodrolytic processes of the starch molecule by the enzymes not only of glandular origin but also of microbial origin (milk-cows and ruminants in general) of the digestive apparatus.

The known processes consist of cold processes such as, e.g., the simple grinding, crushing and rolling, or hot processes; the latter in turn include hydrothermal processes wherein the necessary heat is supplied in the form of steam; amongst these are cited, e.g., pelletting, steaming and rolling, flaking and extrusion; or dry processes such as, e.g. micronization, expansion or popping and microwave treatment.

The processes which deploy the most relevant effects on the structure of the starch are certainly those which imply, in a direct or indirect manner, the presence of heat, even if the final result can differ widely, depending on the mode of conducting the process.However, none of these prior art processes yield the almost complete gelatinisation of the starch.

In order to achieve very high yields also with monogastrics: poultry, pigs, rabbits and young calves (up to the development of the rumen) the total availability for the digestive process of starch is required.

Moreover, for the reasons known to the skilled artisans, animals are weaned very early when the digestive apparatus is still that of a suckling with the enzymes suitable for digesting lactose and casein but hardly suitable for digesting starch and proteins of various origin.

The young pig, the young rabbit or the young calf can very early be deprived of a large part of the lactose carbohydrates provided that their substitutes, (especially starch) are easily acted upon by the still not very efficient pancreatic amylase.

It has now been found that by operating under the conditions provided for by the inventive process, it is possible to make simple, complete and complementary, expanded, hygienized feeds having a rumen undegradable proteic fraction of at least 70%, with an almost completely (at least 90%) dexterinised starch fraction with flavoring agents generated by the manufacturing process.

The inventive process makes use of a machine which has recently been introduced in the feed industry and which is commonly known under the name of "expander".

As with the single-screw extruder, the expander consists of a cylindric duct having a thick wall, divided into segments within which there is a screw. Contrary to the extruder, there is no die plate at the outlet but instead a conical discharge valve which acts as a stopper and which exerts a high pressure on the exiting material.

The inventive process includes the following steps:
- admixing the feedstock of the recipe,
- conditioning of the mixture; humidifying and heating,
- expanding,
- pelletting,
- desiccating,
- cooling.

With the use of a computerized dosing system, all the macro, micro, solid and liquid ingredients of the recipe are perfectly compounded.

The term macroingredient designates those ingredients which are dosed in a meaningful percentage such as, e.g.: cereals in grains, products and by-products of cereals in grains, oil seeds, products and by-products of oil seeds, products and by-products of leguminous seeds, products and by-products of tubers and roots, products and by-products of the sugar industry, products and by-products of fruit processing, desiccated fodder, cellulose products, dairy products, products stemming from land animals, fish products, oils and fats, minerals.

The term microingredients, as it is known, refers instead to active mineral, vitaminic and medicinal and the like substances which - according to good industrial practice - are usually added by means of a carrier mixture (premix) so that said substances are homogeneously distributed throughout the whole feed batch.

It is useful to humidify the mixture from this stage onward. This can be done, as known to those skilled in the art, by dosing a substantial amount of water together with the other liquids ( such as molasses, oils and fats) with the rest of the feedstock.

Also known is the fact that it is fundamental that liquids be incorporated into the dry ingredients, ground into flour in such a way so as not to yield lumps or build up obstructions.

This can be achieved, e.g. by spraying the liquids by means of a turbofan system coupled with high-pressure pumps connected to injecting nozzles of very small caliper suitable for spraying flour in the form of a homogeneous mist during the dwelling time of the feedstock in the mixer. The so humidified mixture starts to become "mellow" and preconditioned in view of the subsequent conditioning step proper.

The conditioning - which, as known to the skilled artisan - is a relatively short( generally, 0.5 to 2 minutes), high temperature hydrothermal process during which the feedstock is "cooked" - occurs in a continuous mixer commonly named conditioner, made up of a metal cylinder within which a shaft provided with a number of blades conveys and mixes the mixture from the inlet to the outlet. During this passage are injected:
- steam at pressures varying of from 1 to 5 bars and in variable amounts of from 100 to 140 kg steam/ton of mixture/hour
- water in percentages varying from 1% to 10%
- further amounts of liquids, such as molasses, vegetable oils and liquefied fats, in percentages varying from 1% to 10%.

It should be pointed out that the percentages vary according to the recipe to be realized. Therefore, the dimensions of the conditioner must be such as to allow that the dwelling time of the mixture be usually of at least 0.5 minute, depending on the capacity of the machine,while the output temperature should not be lower than 100-110°C. The amount of steam to be added depends on this temperature and on the processing capacity which varies according to the recipe, which can contain fiber, starch, proteins, fats in greater or smaller amounts.

According to the process of the instant invention, the addition of water at this stage is of paramount importance since one always has to reach a humidity content of the mixture of 20% to a maximum of 30%, before the expansion, yet taking into account that the water delivered by the steam during heat-up, which amounts to about a 1 percent unit of added humidity per every 10°C of rise in temperature.

Only under these conditions the operation of the expander is optimal for the complete dextrinisation of the starch, the on-set of the Maillard reaction which leads to a lowering of the rumen degradability of the proteins (the so-called texturization) - which in this way become available for the intestinal digestion for at least 70% - and to the generation of flavors during the process. It is submitted that the Maillard reaction reaches its maximum degree of efficiency when the feed is in proximity of the outlet of the expander where the pressure and temperature reach the maximum values, i.e. of about 20-60 bars and of about 150-170°C, very shortly before the flash expansion which leads to an abrupt temperature drop due to the flash evaporization (the so-called flash effect) of the greater part of the water added during processing.

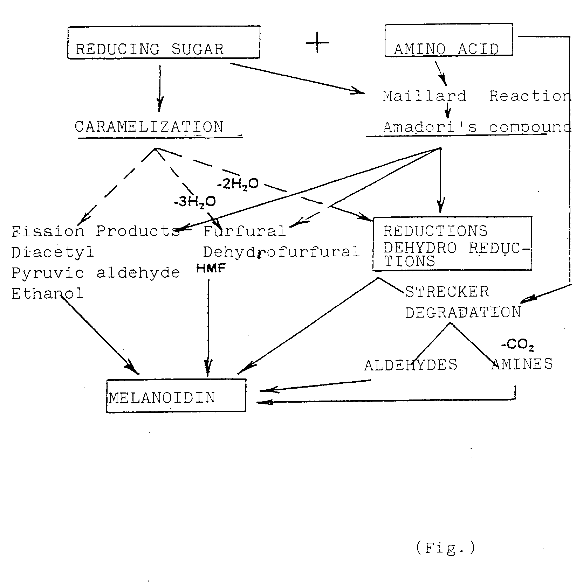

It is believed that the generation of the flavoring substances can occur according to the (simplified) scheme suggested in 1953 by Hodge for the formation of Amadori's and Heyns' intermediates in the course of the Maillard reaction. As per the scheme in Fig.1 (cf. Nicole Moll: Schéma de principe des réactions de brunissement non enzymatique", IAA, May 1993, p.301 ff.)

Among the flavoring substances which are formed and which considerably contribute to improve the palatability of the feed, can be cited, exemplarily, the following:
- products derived from the fermentation and dehydration of sugars: furanes, pyrons, cyclopentanes, carbonylated compounds, acids;
- products derived from the degradation of amino acids: aldehydes and sulfurated compounds;
- products derived from other reactions:pyrroles,pyridines,imidazoles, pyrazines, oxazoles, thiazoles and compounds derived from the aldol condensation.

Furanes, pyrones and cyclopentenes yield sugary, fruity and caramel flavors. Pyrroles and their subclasses, stemming from proline, confer a toasted cereals flavour; pyrazines and thiazoles resemble very closely the flavour of toasted peanuts and of grilled food. Pyridines confer a flavor of green wood.

After conditioning, the feedstock mixture is feeded to the expander. As mentioned previously, in the proximity of the outlet valve the feed is heated, in a very short time, to 140-170°C, through the friction and high pressure to which it is subjected: 20-60 bars (again the pressure depends on the feed composition). This stage can be favored by heating with steam the outer terminal part of the expander,using,for this purpose a metal jacket. In this way time is saved.

At the outlet, the feed undergoes an instantaneous expansion (flash effect) which causes a sharp temperature drop down to 100-110°C and a drop of about 5-7 percent units of the humidity (viz. 1% unit every 10 degrees cooling). At the same time the density drops from 0.6-0.7 kg/l to 0.30-0.40 kg/l, thus imparting lightness, fluffiness and elasticity to the material.

Notwithstanding the water loss, which can amount to 5-7 percent units, the humidity of the material is still too high for proper storage. The too low density involves furthermore considerable problems in terms of cost and time for transportation and storage. Hence arises the problem of restoring the density, by pelletting, as close as possible to the original values and of eliminating the excess humidity. When such a humid mixture needs to be pelletted, a die plate with a compression ratio not higher than 1:6 is used. Therefore, after pelletting, the feed is conveyed into a counter-current hot air dessicator so that the residual humidity is lowered to 9%-12%, whereupon the material is cooled to ambient temperature in a cooling machine. At the outlet, the pelletted and cooled feed is firm, not friable,having a specific weight ranging from 0.45 kg/l to 0.60 kg/l, of optimum durability (equal to at least 95% as measured with the Holmen instrument over one minute), with an optimum residual humidity for storage, crisp, of pleasant smell and of darker colour (browning, due to the Maillard reaction).

The instant invention will now be better illustrated by means of the following working examples:

### Example 1: Complementary Feed for High-Production Milk-Cows.

This example relates to a starch-rich feed with a medium protein content, suitable for rations without silo corn, to be combined with farm fodder.

In a 4000 kg mixer the following ingredients are added (as parts per weight):

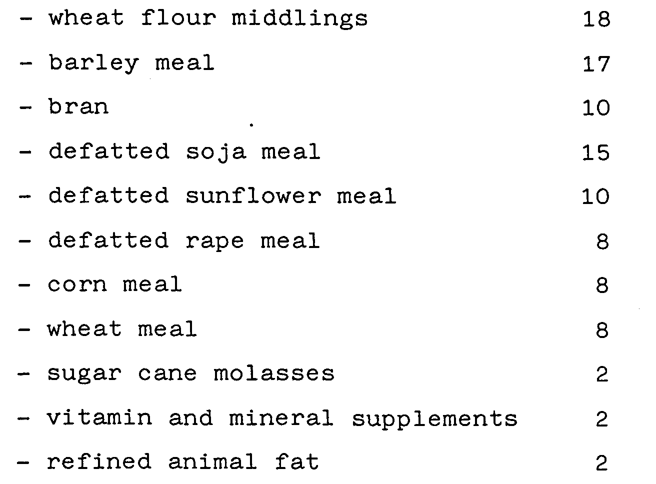

Usually, for every recipe from four to eight 16-32 ton batches are prepared. From the mixer the feedstock is fed to the silo, and therefrom it is passed to a hopper with minimum and maximum levels. When the latter is emptied the minimum level generates the load signal whereupon the silo fills the hopper again up to the maximum level, which generates the stop signal. In this way a continuous flow to the downstream machines is assured. The hopper is fitted on top,of the feeder, the motor of which, provided with a frequency converter, is goverened by the process computer which sets the desired speed so as to attain, given the density of the mixture, the optimum capacity for the proper operation of the expander.

From the feeder the mixture, of average humidity of about 11% and of ambient temperature, drops into the conditioner where it is heated up by steam to a temperature of 100-110°C, with a consequent increase of the humidity of 6-8 percent units: the optimum degree of humidity for this recipe, amounting to 21%-23%, is achieved through the addition of water.

The conditioner, as already stated, is a continuous mixer having a shaft provided with blades which rotates vortically as to allow a quick diffusion of steam, water and possibly other liquid substances,into the mixture being conveyed. The mixture is conveyed from the inlet, located on top of one of the ends of the conditioner, through to the outlet, located beneath the opposite end. The conveyance is assured by the shape and the pitch of said blades. The variation of the dwelling time of the feedstock in the conditioner is achieved by either favouring or hampering the outflow of the mixture. When the outflow is hampered, the conditioner tends to fill itself up and only at that point can the mixture flow out. It is essential for the mixture to dwell in the conditioner for as long as possible so as to allow optimal heating and cooking of all the ingredients of the recipe. This dwelling time must not be less than one half of a minute. The so conditioned mixture drops into the conveyer of the expander and pushed towards the outlet. The forwarding of the mixture is strongly hampered first by friction elements and then by a cone-shaped stopper at the outlet. At the proximity of the outlet, pressure reaches the value of 20-60 bars and the temperature approx. 155°C. At the outlet, the mixture drops into a lump-breaker whereby it is broken into crumbs suitable for pelletting. By pelletting, the crumbs are compacted again and rendered denser. The pellett is thus suitable for desiccation up to a humidity content ranging from 9% to 12%. Cooling concludes the whole cycle.

The percent chemical analysis of the finished material is the following:

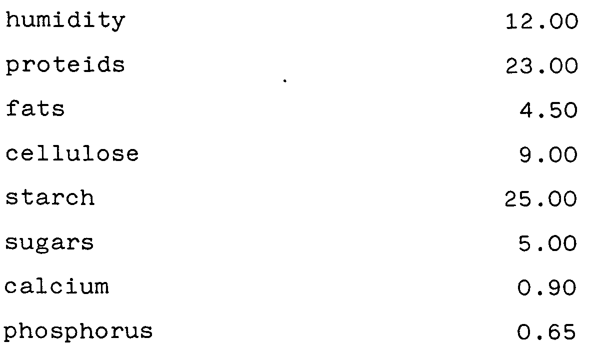

The milk fodder unit U F L is of 1.15 (per kg feed). [UFL standing for "Unité fourragère lait". This parameter has been developed by I.N.R.A.( Institute National de Recherche Agronomique,Paris,France). It measures the quantity of Net Energy for the production of Milk (Lait) (ENL) included in 1 kg barley of reference: (870 grams dry matter: 2700 kcalories metabolisable Energy). 1 UFL = 1700 kcalories or 1.70 Mcalories of ENL - 1 kg barley contains 1 UFL].

### Example 2: Complementary Feed for High-Production Milk Cows.

This example relates to a feed having average starch and protein content, suitable for rations containing corn, silage grass and farm fodder.

The same method as described in Example 1 is followed but using the following ingredients (as parts per weight):

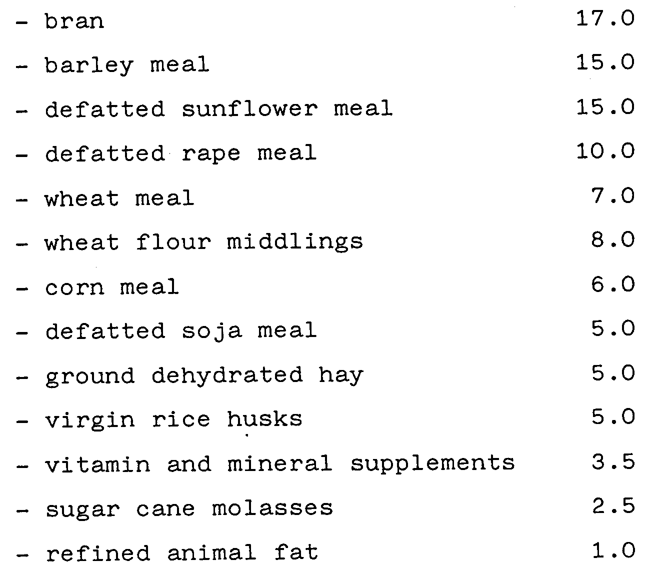

Also for this recipe apply similar values of temperature (100-110°C), total humidity (21%-23%) of the mixture and cooking time (0.5 - 2 minutes) during conditioning, as those described in Example 1.
The percent chemical analysis of the finished material is the following:

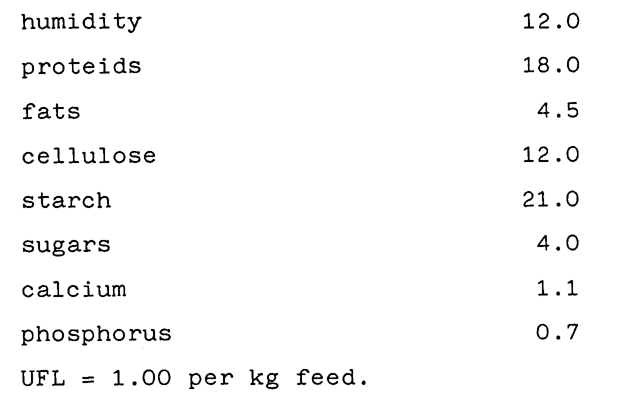

### Example 3: Complementary Feed for High-Production Milk-Cows.

This example relates to a feed very rich in protein, having an average starch content, suitable for rations with cereal meal, corn mash and fodder.

Operating as described in Example 1, the following ingredients are used (as parts per weight):

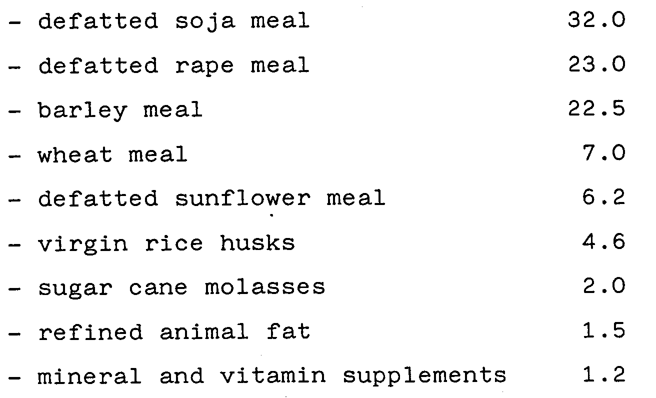

Also for this recipe apply the temperature (100-110°C), the total humidity of the mixture (21%-23%) and the cooking time (0.5 to 2 minutes) values, during conditioning, as described in Example 1.

The percent chemical analysis of the finished material is the following:

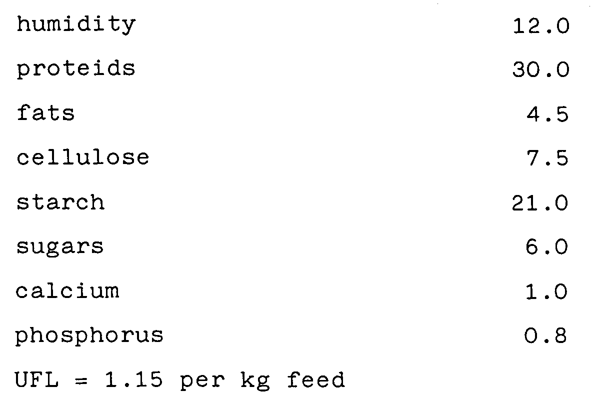

### Example 4: Complementary Feed for Weaning Calves

This example relates to a feed rich in starch, of high energetic value, to be rationed as set out in Table II.

The same method as described in Example 1 is followed but using the following ingredients (as patts per weight):

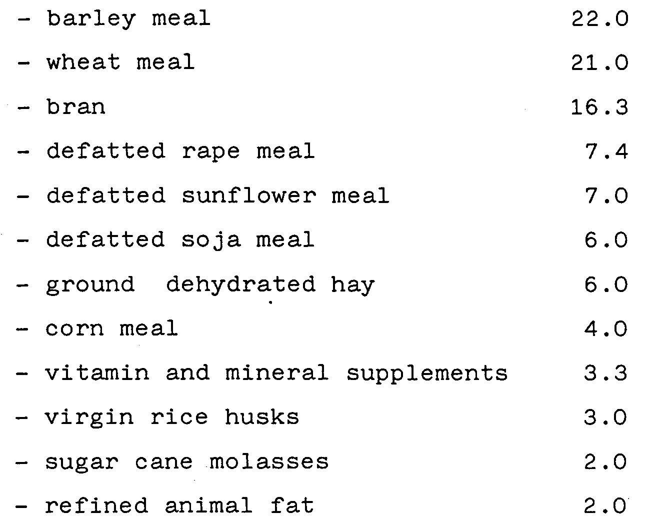

The temperature, humidity and the cooking time values are those described in Example 1, while the pressure at the outlet of the expander reaches 60 bars and the temperature is of 160°C.

The percent chemical analysis of the finished material is the following:

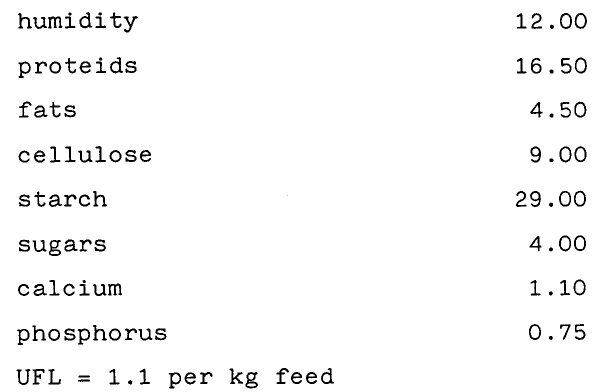

### Example 5: Complementary Feed for Weaning Rabbits

This example relates to a cellulose-rich feed, of average starch content, to be administered ad lib to 28-55 day old rabbits.
The same method as described in Example 1 is followed but using the following ingredients (as parts per weight):

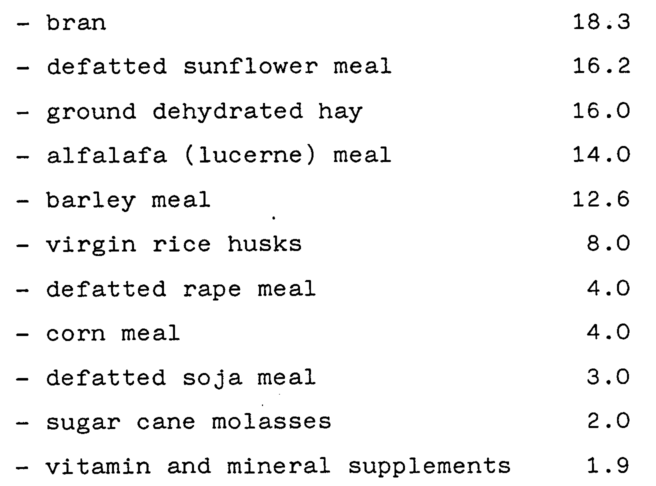

For this recipe apply the temperature and cooking values as described in Example 1, while the total humidity of the mixture, during conditioning, is of from 23% to 25% and attained as described in said Example, the pressue of the expander being of 55 bars and the temperature of 165°C.

The percent chemical analysis of the finished material is the following :

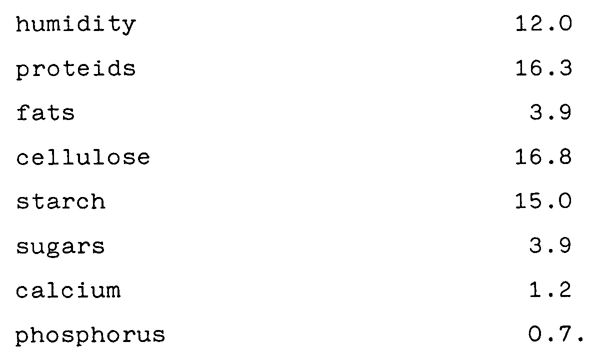

The digestible energy (DE) of this feed corresponds to 2600 kcal per kg feed.

As a result of this inventive method, this expanded feed, as all the other feeds in which thanks to the inventive method the moulds have been completely destroyed, is especially suitable for feeding young rabbits which are particularly susceptible towards toxines produced by Mycetes.

By administering this feed to young rabbits starting from their 23rd day of life up to when they are 53-55 days old, it is possible to reduce their mortality rate (generally high at this age) to a minimum and to achieve particularly high growth rates under the same feed consumption.

### Example 6: Complementary Feed for Piglets.

This example relates to a complete, starch-rich feed of high energetic content, suitable for administering to piglets after the 10th day from birth, until they reach the live weight of 10 kg.

Also for this recipe the same method is followed as described in Example 1, but using the following ingredients (as parts per weight):

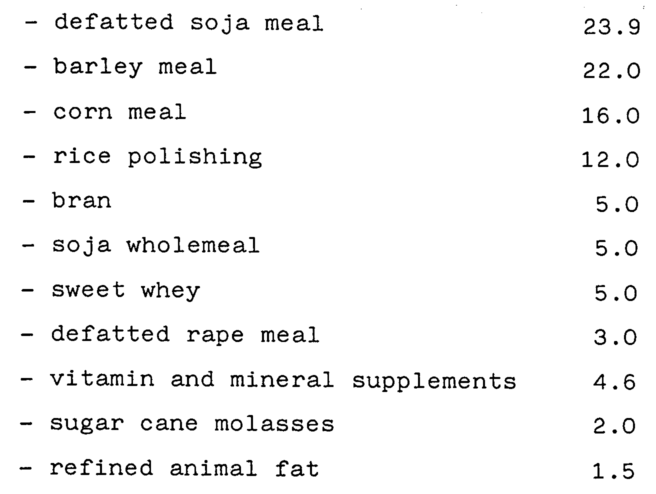

The temperature and the cooking time are those described in Example 1 while the total humidity of the mixture, during conditioning, is of from 24% to 26%, the pressure of the expander being 40 bars and the temperature 150°C.

The percent chemical analysis of the finished material is the following :

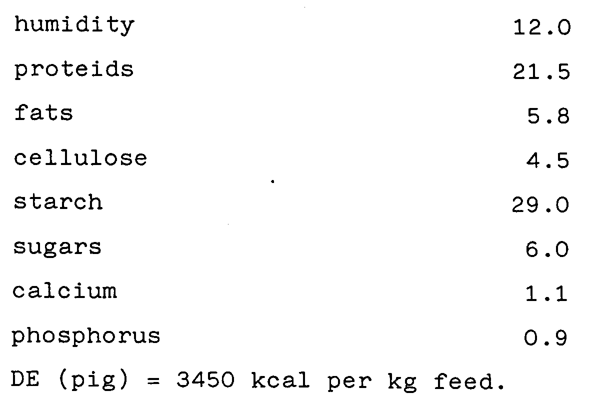

### Example 7: Complementary Feed for Egg-laying Hens.

This example relates to a feed to be administered in rations with drinking water readily available.

Operating as described in Example 1, the following ingredients are used :

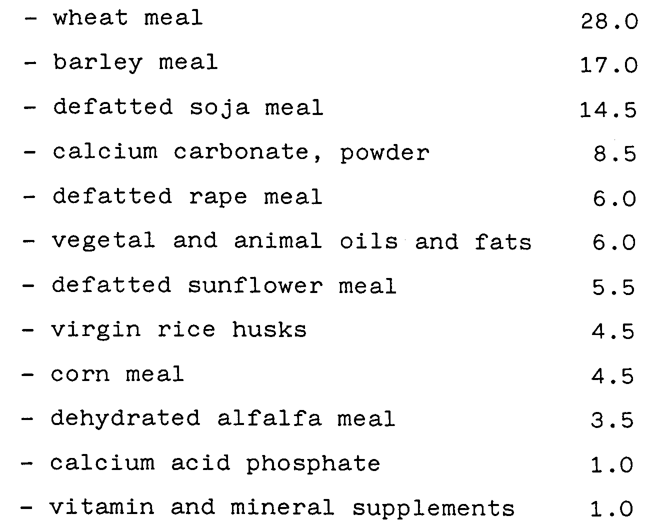

The temperature and the cooking time, during conditioning, are those described in Example 1, while the total humidity of the mixture is of from 24% to 26%, the pressure,in the expander, being 38 bars and the temperature 153°C.

The percent chemical analysis of the finished material is the following :

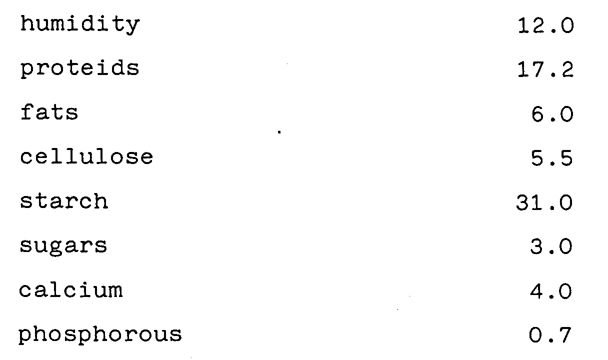

The metabolizable energy (hen) proved to be 2800 kcal per kg feed.

The feeds described in Examples 1 and 3 have been employed on farms and have been compared with prior art feeds.

### Field Test 1

54 Frisian cows were fed with a ration of the following composition

(of the prior art):

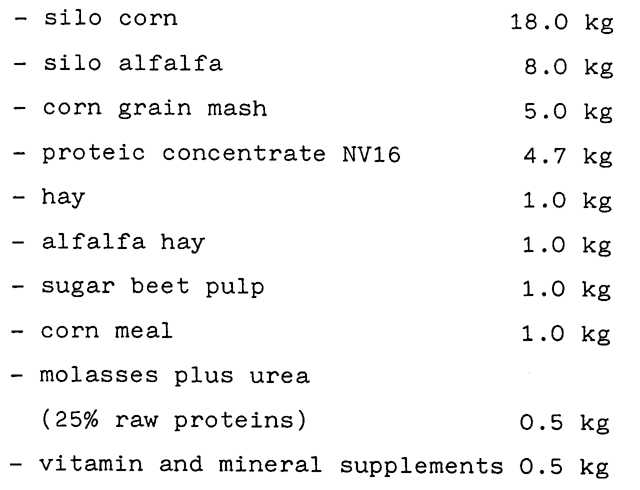

The proteic concentrate VN16, manufactured by Uvigal, is a non-expanded complementary feed of the prior art, having the following features:

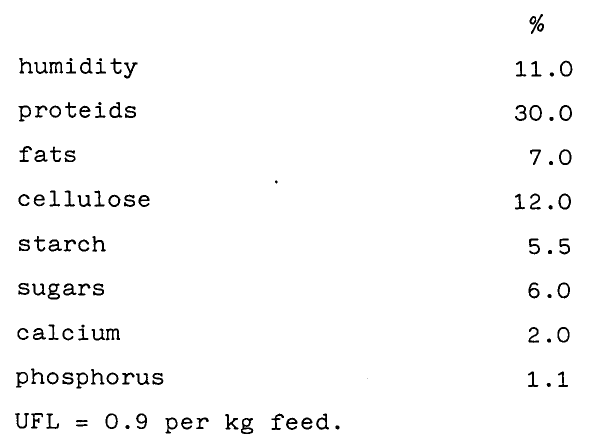

The average daily milk production of stalled milk-cows with this diet is of 29 liters.

For the same 54 cows the diet was changed as follows:

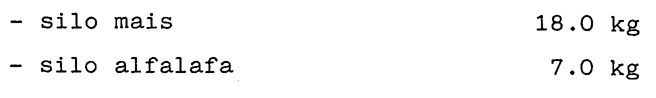

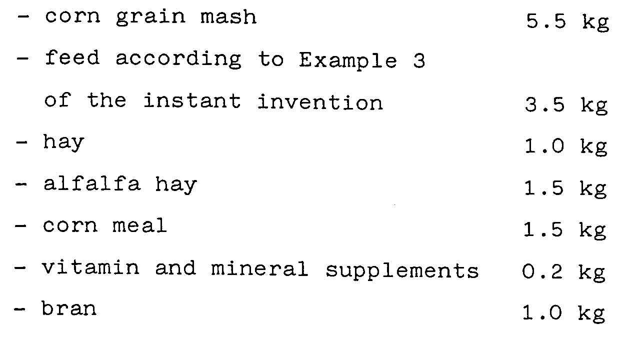

The higher feed ingestion due to better digestibility and palatability of the feed and the high by-pass protein content have allowed to increase the average daily milk production per stalled cow to 32 liters.

### Field Test 2

In another farm, 70 Frisian milk-cows, raised freely, the following comparison was made:

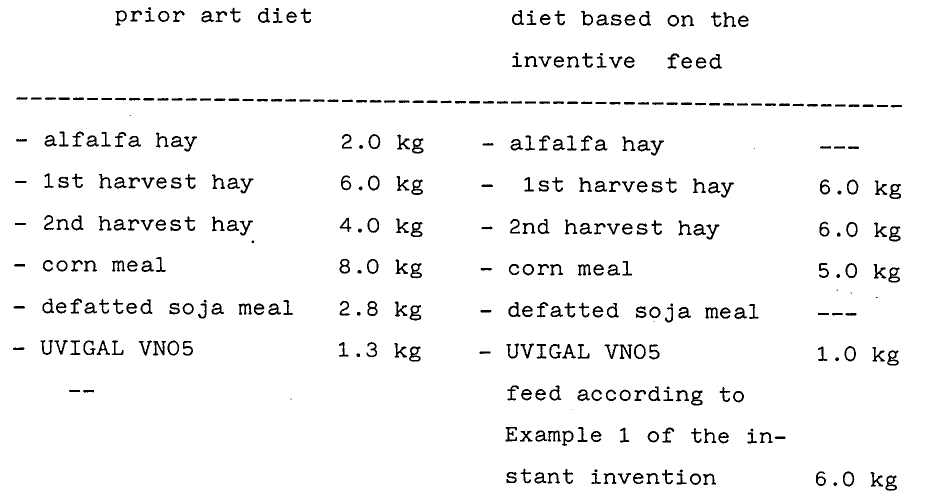

The average daily milk production per stalled milk cow increased from 26.5 liters to 30 liters thanks also to the higher ingestion of feed by the animals because of its better digestibility and palatability and its high by-pass protein content. The UVIGAL VNO5 complementary feed is based upon fish meal and corn gluten having 36% protides and a high amount of vitamin-mineral supplements.

### Field Test 3

In a farm of 26 Frisian cows the followng recipes were compared:

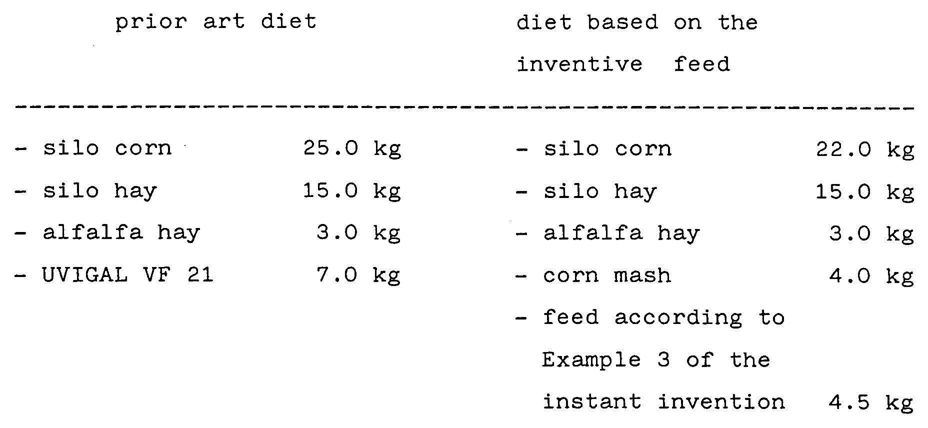

With rations containing the inventive complementary feed, after 3-4 days an average daily increase of 1.5 liters of milk from stalled milk-cows was noted.

The prior art UVIGAL 21 complementary feed corresponds to the following percent analysis:

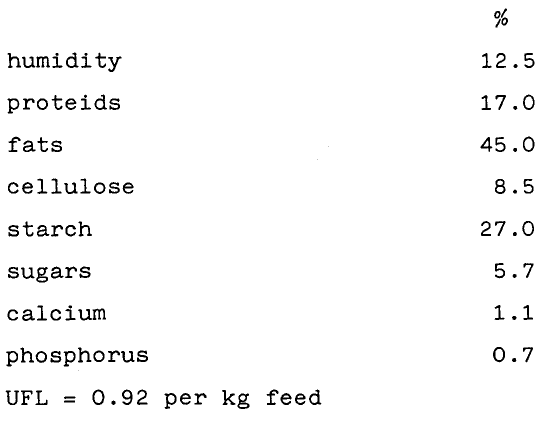

By administering to cows the inventive expanded feeds it was possible to achieve an increase in milk production already after 3-4 days, the protein and fat content in the milk remaining the same.

Tests and comparisons carried out on farms have proven that the use of expanded feeds in the feeding ration has considerably reduced the milk production costs as a result of using a lower amount be it of costly raw materials, be it of supplements of the type commonly used in the feed manufacture - this inasmuch as the inventive method allows to use rations of lower cost - be it also because with the use of the inventive feed a higher milk production is attained for the same amount of ingested dry matter.

### Field Test 4

In a calf weaning program, the feed according to Example 4 of the instant invention was used. Vis-à-vis the conventional weaning technologies, above all a considerably lower weaning period was required. In fact, whereas the duration of the conventional weaning technology is of 90 days, by using the complementary feed according to the instant invention it was possible to reduce this duration to 56 days.

As it is known to those skilled in the art, the end of the suckling period (weaning) depends upon the time when the animal has reached a sufficient feed consumption to cover its own needs and is such as not to compromise its own health and its digestive capacity: this usually occurs when the feed consumption has reached the amount of 1.5 to 2 kg per day.

Table I illustrates the conventional programme followed for weaning at 90 days; in the subsequent Table II is reported the precocious weaning program using the complementary feed according to Example 4.

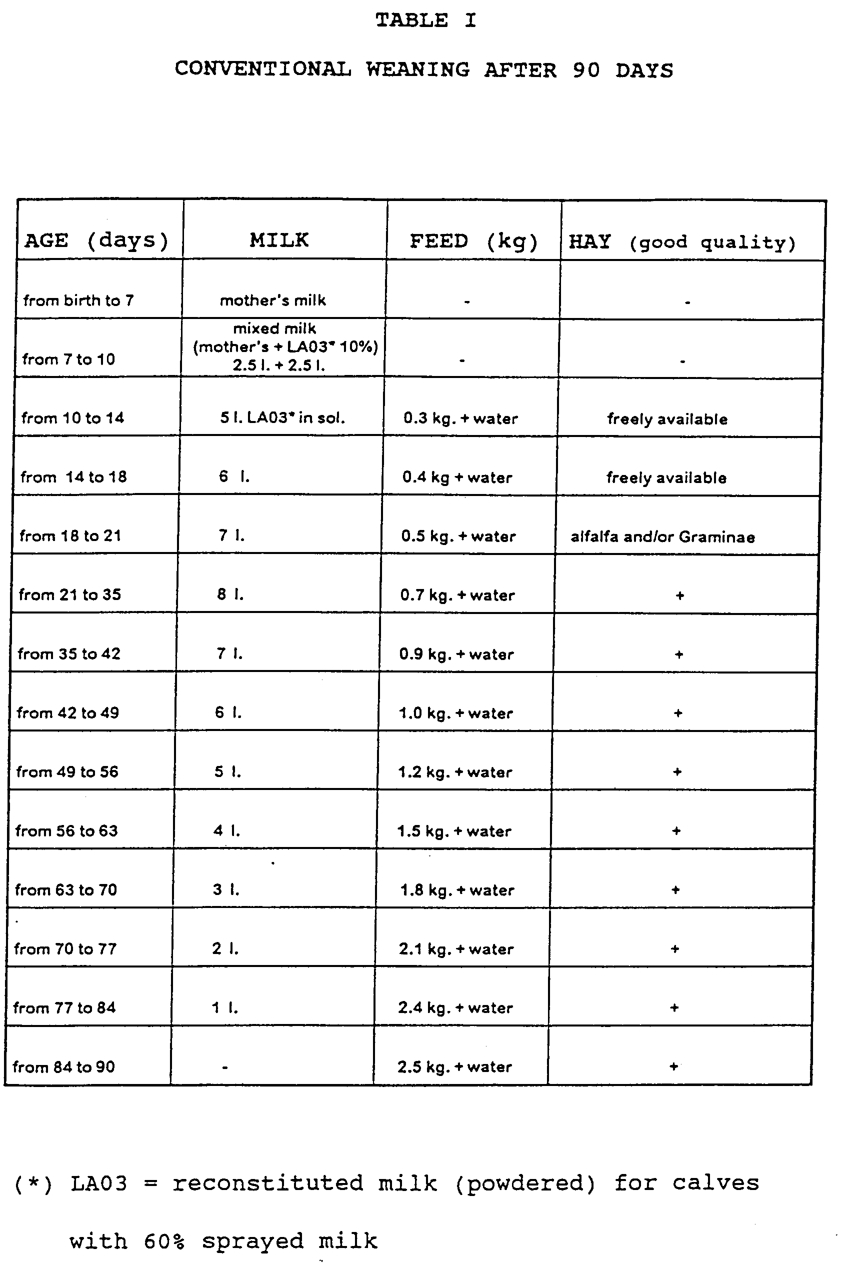

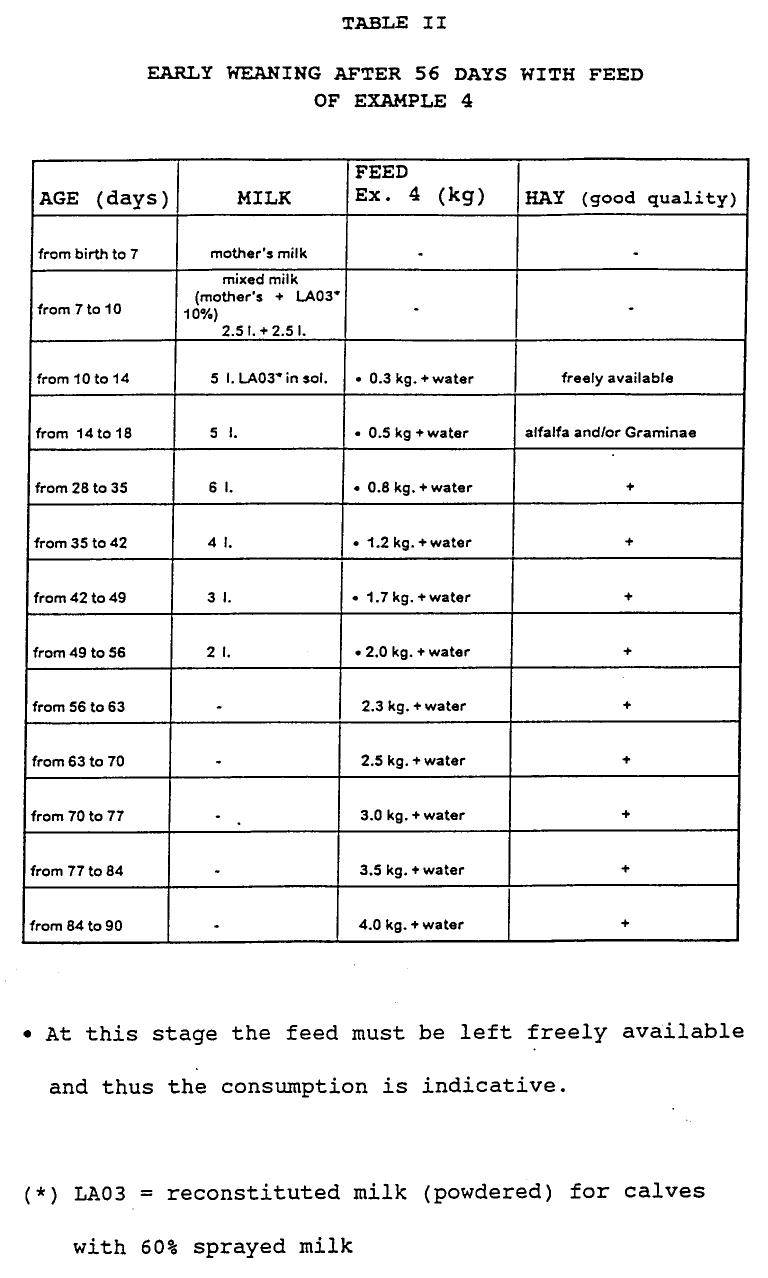

As stated, according to the inventive method, the feed is subjected to the combined steam, temperature and pressure effect which in the end gives rise to a novel, cooked, sanitised, very palatable feedstuff of modified structure.

Of particular importance, amongst the effects stemming from the inventive method, is the starch gelatinisation which yields a speed increase in the amylolysis and hence a greater possibility of attack by the gastrointestinal juices and the digestive enzymes of the feed.

Further advantages are the inactivation of the antinutriional factors and the killing of pathogen microorganisms which render the feed "healthier".

When an easily digestible feed is used for weaning calves, such as that according to the invention, the consumption thereof can even be doubled over conventional feed, thereby allowing a considerable reduction in milk consumption and hence in the costs deriving therefrom.

With the use of the inventive complementary feed, thanks to the pre-digestion of the starch and proteins, a better assimilation of the solid feedstuff in the intestines is possible, which therefore can be ingested more quickly and in larger amounts by the still monogastric calf.

In addition thereto, the stimulating action in the rumen is anticipated, factor which is particularly important for promoting an increase in the ingestive capacity of what in future ought to become a high-production milk-cow.

## Claims

1. Simple, complete or complementary, expanded hygenized feeds, having the flavoring substances generated by the manufacturing process of said feeds, with the browning of the latter, a residual humidity of from 9 to 12 percent, a density of from 0.30 kg/l to 0.40 kg/l, characterized by the fact of having:
(a) a rumen undegradable protein fraction equal to, or greater than 70 percent, of the total proteins,
(b) a dextrinised starch fraction equal to, or greater than 90 percent of the total starch..

2. Feeds according to claim 1, characterized by the fact that they are in the form of crispy, brown, pellets, having a residual humidity of from 9 to 12 percent, a density of from 0.45 kg/l to 0.60 kg/l, and a durability equal to, or greater than 95%.

3. A process for manufacturing feeds according to claim 1 or 2 characterized by the fact that (a) the solid liquid macroingredients, microingredients of the recipe are mixed, in a manner known per se, and then (b) the so prepared mixture is conditioned for at least 0.5 minute by steam heating or by humidifying with steam and water so that the mixture at the conditioner's end and prior to expanding reaches a temperature of at least 100°C and a humidity of from 20 to 30 percent, (c) whereafter the conditioned mixture is fed to an expander wherein it heats further, under browning, up to 140 to 170°, in a very short time, at a pressure of from 20 to 60 bars, whereupon (d) the mixture undergoes a flash expansion with an abrupt temperature drop down to 100 to 110°C, a drop of the humidity of 5 to 7 percent units as well as of the density from 0.30 to 0.40 kg/l, whereafter (e) the feed is dried to a residual humidity from 9 to 12 percent, and (f) finally, it is cooled to ambient temperature.

4. A process according to claim 3, characterized by the fact that after step (d) the mixture is pelletted with a pellett mill having compression ratio in the die not higher than 1:6, and the so obtained pellets are desiccated to a residual humidity content of from 9 to 12 percent and cooled.

5. A process according to claim 3 or 4 characterized by the fact that during conditioning (a) steam having a pressure of from 1 to 5 bars, in an amount of from 100 to 140 kg per ton of mixture per hour and (b) water in an amount of from 1 to 10 percent are injected into the feedstock mixture.

## Patentansprüche

1. Einfaches, vollwertiges oder ergänzendes expandiertes hygienisiertes Futtermittel, welches die Geschmacksstoffe, die durch den Herstellungsprozeß des Futtermittels unter Bräunung des letzteren erzeugt wurden, eine Restfeuchtigkeit von 9 bis 12 Prozent und eine Dichte von 0,30 kg/l bis 0,40 kg/l hat, gekennzeichnet durch die Tatsache, daß es aufweist:
(a) eine im Pansen nicht abbaubare Proteinfraktion gleich oder von mehr als 70 Prozent der Gesamtproteine;
(b) eine dextrinisierte Stärkefraktion gleich oder von mehr als 90 Prozent der Gesamtstärke.

2. Futtermittel nach Anspruch 1, gekennzeichnet durch die Tatsache, daß es in Form von knusprigen braunen Pellets vorliegt, die eine Restfeuchtigkeit von 9 bis 12 Prozent, eine Dichte von 0,45 kg/l bis 0,60 kg/l und eine Festigkeit gleich oder von mehr als 95 Prozent haben.

3. Verfahren zur Herstellung von Futtermittel nach Anspruch 1 oder 2, gekennzeichnet durch die Tatsache, daß (a) die festen und flüssigen Makroingredienzien, Mikroingredienzien des Rezeptes in einer an sich bekannten Weise gemischt werden und dann (b) die so hergestellte Mischung mindestens 0,5 Minuten lang durch Dampferwärmung oder durch Befeuchten mit Dampf und Wasser konditioniert wird, so daß die Mischung am Ende der Konditioniereinrichtung und vor dem Expandieren eine Temperatur von mindestens 100 °C und eine Feuchtigkeit von 20 bis 30 Prozent erreicht, (c) wonach die konditionierte Mischung in eine Expandiereinrichtung gegeben wird, in der sie unter Bräunung weiter auf 140 bis 170 ° in sehr kurzer Zeit unter einem Druck von 20 bis 60 Bar erwärmt wird, woraufhin (d) die Mischung einer sehr raschen Expansion mit einem abrupten Temperaturabfall auf 100 bis 110 °C, einem Feuchtigkeitsabfall von 5 bis 7 Prozenteinheiten sowie einem Dichteabfall von 0,30 bis 0,40 kg/l unterzogen wird, wonach (e) das Futtermittel auf eine Restfeuchtigkeit von 9 bis 12 Prozent getrocknet wird und (f) schließlich auf Umgebungstemperatur abgekühlt wird.

4. Verfahren nach Anspruch 3, gekennzeichnet durch die Tatsache, daß nach Schritt (d) die Mischung mit einer Pelletierpresse pelletiert wird, die in dem Formwerkzeug ein Kompressionsverhältnis von nicht mehr als 1:6 hat, und die so erhaltenen Pellets auf einen Restfeuchtigkeitsgehalt von 9 bis 12 Prozent getrocknet und gekühlt werden.

5. Verfahren nach Anspruch 3 oder 4, gekennzeichnet durch die Tatsache, daß während der Konditionierung (a) Dampf mit einem Druck von 1 bis 5 Bar in einer Menge von 100 bis 140 kg pro Tonne Mischung pro Stunde und (b) Wasser in einer Menge von 1 bis 10 Prozent in die Futtermittelmassenmischung eingespritzt werden.

## Revendications

1. Aliments simples, complets ou complémentaires, expansés et hygiénisés, possédant les substances aromatisantes générées par le procédé de fabrication desdits aliments, avec le brunissement de ces derniers, une humidité résiduelle comprise entre 9 et 12 pour cent, une densité comprise entre 0,30 kg/l et 0,40 kg/l, caractérisés en ce qu'ils possèdent :
(a) une fraction protéique non dégradable dans le rumen supérieure ou égale à 70 pour cent des protéines totales,
(b) une fraction d'amidon dextrinisé supérieure ou égale à 70 pour cent de l'amidon total.

2. Aliments selon la revendication 1, caractérisés en ce qu'ils se présentent sous forme de pastilles brunes croustillantes, possédant une humidité résiduelle comprise entre 9 et 12 pour cent, une densité comprise entre 0,45 kg/l et 0,60 kg/l, et une stabilité supérieure ou égale à 95 %.

3. Procédé de fabrication d'aliments selon la revendication 1 ou 2, caractérisé en ce que (a) les macro et micro-ingrédients solides et liquides de la recette sont mélangés, d'une façon connue en soi, ensuite (b) le mélange ainsi préparé est conditionné pendant au moins 0,5 minutes par chauffage à la vapeur ou par humidification avec de la vapeur et de l'eau de telle sorte que le mélange, à la sortie du conditionneur et avant l'expansion, atteint une température d'au moins 100 °C et une humidité de 20 à 30 pour cent, (c) après quoi le mélange conditionné est acheminé vers un expanseur dans lequel il est encore chauffé, avec brunissement, jusqu'à une température de 140 à 170°, dans un délai très court, à une pression comprise entre 20 et 60 bars, suite à quoi (d) le mélange subit une expansion éclair avec une chute soudaine de température à 100-110 °C, une baisse de l'humidité de 5 à 7 unités en pourcentage ainsi que de la densité de 0,30 à 0,40 kg/l, après quoi (e) l'aliment est séché jusqu'à l'obtention d'une humidité résiduelle comprise entre 9 et 12 pour cent, et (f) finalement refroidi à température ambiante.

4. Procédé selon la revendication 3, caractérisé en ce que, après l'étape (d), le mélange est transformé en pastilles au moyen d'une machine de pastillage possédant un rapport de compression dans la matrice qui ne dépasse pas 1/6, et les pastilles ainsi obtenues sont déshydratées jusqu'à l'obtention d'un degré d'humidité résiduelle de 9 à 12 pour cent puis refroidies.

5. Procédé selon la revendication 3 ou 4, caractérisé en ce que, lors du conditionnement, (a) de la vapeur ayant une pression de 1 à 5 bars en une quantité de 100 à 140 kg par tonne de mélange et par heure et (b) de l'eau à raison de 1 à 10 pour cent sont injectées dans le mélange de matières premières.
